# EUROPÄISCHE PATENTSCHRIFT

(11) **EP 3 641 129 B1**
(45) Veröffentlichungstag und Bekanntmachung des Hinweises auf die Patenterteilung: **19.06.2024**
(21) Anmeldenummer: 19202168.1
(22) Anmeldetag: 09.10.2019
(51) Int. Cl.: H02S 20/10

(54) **MONTAGEVERFAHREN ZUR MONTAGE EINER MODULBAUGRUPPENKONSTRUKTION UND INSBESONDERE ZUR MONTAGE VON PHOTOVOLTAIKANLAGEN**
ASSEMBLY METHOD FOR MOUNTING A MODULAR ASSEMBLY STRUCTURE AND IN PARTICULAR FOR ASSEMBLING PHOTOVOLTAIC INSTALLATIONS
PROCÉDÉ DE MONTAGE PERMETTANT DE MONTER UNE CONSTRUCTION MODULAIRE ET, EN PARTICULIER DE MONTER DES INSTALLATIONS PHOTOVOLTAÏQUES

(30) Priorität: 18.10.2018 DE 102018125957
(43) Veröffentlichungstag der Anmeldung: 22.04.2020
(73) Patentinhaber: Montagebau Karl Göbel Besitz GmbH & Co. KG, 74613 Öhringen (DE)
(72) Erfinder: GÖBEL, Karl, 74613 Öhringen (DE); GÖBEL, Marco, 74613 Öhringen (DE)
(74) Vertreter: Staeger & Sperling Partnerschaftsgesellschaft mbB

(56) Entgegenhaltungen:
- WO-A2-2012/075149
- DE-A1-102014 102 716
- DE-U1-202012 102 167

## Beschreibung

Die Erfindung betrifft ein Montageverfahren zur Montage einer Modulbaugruppenkonstruktion, wobei die Modulbaugruppenkonstruktion vorzugsweise Photovoltaikmodule umfasst und das Montageverfahren somit insbesondere zur Montage einer aus den Photovoltaikmodulen gebildeten Photovoltaikanlage dient. Zudem betrifft die Erfindung eine zu dem Montageverfahren gehörende Vorrichtung und insbesondere eine Verschiebevorrichtung sowie die Verwendung der Verschiebevorrichtung für das Verfahren.

Die im Stand der Technik Anwendung findenden Montageverfahren zur Montage von Modulbaugruppenkonstruktionen für Photovoltaikmodule und aus den Photovoltaikmodulen gebildete Photovoltaikanlagen beruhen zumeist darauf, dass einzelne Photovoltaikmodule sowie weitere Bauteile oder eine gesamter Modulbaugruppe mit mehreren Photovoltaikmodulen aufwändig auf dafür vorgesehenen und dafür angelegten Transportwegen zu ihrer jeweiligen Endmontageposition bewegt werden und dort auf Trägern angeordnet und montiert werden müssen.

Daraus ergibt sich, dass die einzelnen Bauteile, nachdem sie auf die Baustelle der Photovoltaikanlage angeliefert wurden, anschließend zu ihrer Endmontageposition transportiert werden müssen, wofür ein hoher Personalaufwand und teils schweres Arbeitsgerät, wie beispielsweise Stapler oder geländegängige Sonderfahrzeuge, notwendig sind.

Insbesondere bei großen Photovoltaikanlagen, welche beispielsweise auf einem Feld oder einer Wiese aufgebaut werden, kann es bei schlechter Witterung bzw. Regen schnell dazu kommen, dass die Transportwege der Bauteile verschlammen und nicht oder nur schwer passierbar werden.

Teilweise muss die Montage daher aufgrund der schlechten Witterung oder einer vorangegangenen schlechten Witterung eingestellt werden.

Um zeitliche Vorgaben für die Montage einzuhalten, ist es daher im Stand der Technik notwendig, die Bauteile mit geländegängigen und teuren Transportmitteln zu transportieren oder die Transportwege zeit- und kostenintensiv für den Transport auf- und vorzubereiten.

Da der im Stand der Technik verbreitete aufwändigen Transport der Bauteile, wie beispielsweise der Photovoltaikmodule, zu der Endmontageposition zudem auch körperlich anstrengend ist, sind die bekannten Montageverfahren ergonomisch ungünstig und ermüden das für die Montage zuständige Fachpersonal. Auch für die Montage benötigte Vorrichtungen müssen bei den im Stand der Technik verbreiteten Verfahren zumeist an jeder Endmontageposition neu aufgebaut werden, um die Montage der einzelnen Baugruppen zu ermöglichen.

Aus der WO 2012/075 149 A2 ist beispielsweise ein Montageverfahren und eine zugehörige Vorrichtung bekannt, bei welchem die Modulbaugruppen einer Modulbaugruppenkonstruktion mit einer festmontierten Verschiebevorrichtung auf Längsträgern verschoben und mit den Verschiebevorrichtungen montiert werden. Weitere Montagevorrichtungen bzw. -verfahren sind zudem aus den Schriften DE 20 2012 102167 U1 und DE 10 2014 102716 A1 bekannt. Dabei lehrt die DE 20 2012 102167 U1, die Verschiebung und Montage eines einzelnen Querträgers mittels einer auf und entlang der Längsträger verschiebbaren Verschiebevorrichtung.

Der Erfindung liegt deshalb die Aufgabe zugrunde, die vorgenannten Nachteile zu überwinden und ein Montageverfahren zur Montage einer Modulbaugruppenkonstruktion bereitzustellen, bei welcher Bauteile der Modulbaugruppenkonstruktion einfach und effizient und ohne besondere Vor- oder Aufbereitung des Transportweges sowie ohne schwere Arbeitsgeräte zu ihrer Endmontageposition transportiert und dort montiert werden können.

Diese Aufgabe wird durch die Merkmalskombination gemäß Patentanspruch 1 gelöst.

Der Grundgedanke der vorliegenden Erfindung ist es, die Längsträger einer Modulbaugruppenkonstruktion, die für die Modulbaugruppenkonstruktion ohnehin vorhanden sind, nicht nur für die Fixierung und Ausrichtung der Modulbaugruppen zu nutzen, sondern zugleich für deren Transport von einer Vormontageposition der Modulbaugruppen, an welcher diese vormontiert werden, zu einer Endmontageposition, an welche die Modulbaugruppen an den Längsträgern fixiert und somit montiert bzw. endmontiert werden.

Auf entsprechend großen Photovoltaikanlagen sind die Längsträger teils mehrere hundert Meter lang und enden jeweils an den Rändern der Photovoltaikanlage und an Versorgungswegen, welche sich durch die Photovoltaikanlagen erstrecken. Die einzelnen Modulbaugruppen werden erfindungsgemäß daher insbesondere an den Enden der Längsträger bzw. an einem endseitigen zu dem jeweiligen Ende in Längsrichtung der Längsträger unmittelbar angrenzenden Abschnitt vormontiert und auf bzw. mit einer Verschiebevorrichtung von der Vormontageposition zu ihrer jeweiligen Endmontageposition entlang und auf den Längsträgern verschoben. Darüber hinaus werden die Modulbaugruppen vorzugsweise nicht einzeln verschoben, sondern nacheinander an der Vormontageposition auf den Längsträgern angeordnet und um jeweils eine Breite der Modulbaugruppen auf den Längsträgern verschoben, so dass die bereits zuvor auf den Längsträgern angeordneten Modulbaugruppen immer weiter entlang der Längsträger zu ihrer jeweiligen Endmontageposition verschoben werden.

Erfindungsgemäß wird daher ein Montageverfahren zur Montage einer Modulbaugruppenkonstruktion vorgeschlagen. Die Modulbaugruppenkonstruktion umfasst zumindest zwei parallel verlaufenden Längsträger, die an einem Untergrund fixiert sind, und einer Vielzahl an den Längsträgern zu montierenden Modulbaugruppen. Bei dem Untergrund handelt es sich vorzugsweise um einen Boden beispielsweise einer Wiese oder eines Feldes mit dem die Längsträger unmittelbar oder beispielsweise mittelbar durch Stützpfosten fixiert oder im Boden verankert sind, wobei der Boden alternativ auch beispielsweise ein Dach insbesondere ein Flachdach einer Industrieanlage sein kann. Eine an den Längsträgern montierte Modulbaugruppe erstreckt sich jeweils diese miteinander verbindend quer zu den Längsträgern. Bei dem Verfahren wird zumindest eine Modulbaugruppe der Vielzahl von Modulbaugruppen an einer an den Längsträgern positionierten Vormontageposition in einer vorbestimmten Anordnung an den Längsträgern ausgerichtet und auf zumindest einer an den Längsträgern und entlang einer Längsrichtung der Längsträger verschiebbaren Verschiebevorrichtung angeordnet. Dabei kann sowohl eine einzelne Modulbaugruppe als auch mehrere Modulbaugruppen benachbart zueinander an der Vormontageposition angeordnet bzw. an der Vormontageposition vormontiert werden. Anschließend wird die zumindest eine auf der zumindest einen Verschiebevorrichtung angeordnete Modulbaugruppe mit der zumindest einen Verschiebevorrichtung entlang der Längsrichtung der Längsträger von der Vormontageposition zu einer an den Längsträgern positionierte Endmontageposition verschoben. Vorzugsweise ist die Endmontageposition um zumindest die entlang der Längsrichtung gemessene Breite einer Modulbaugruppe entlang der Längsrichtung von der Vormontageposition versetzt. Zudem wird bei dem Verfahren die zumindest eine Modulbaugruppe in der Endmontageposition an den Längsträgern fixiert und dadurch endmontiert bzw. montiert.

Da die Längsträger ohnehin vorhanden sind, um die Modulbaugruppen bzw. Module der Modulbaugruppen montieren zu können, werden die Längsträger durch die Verschiebevorrichtung neben ihrer Funktion als Montageschienen zugleich als Transportschienen genutzt, so dass der Transport der Modulbaugruppen zu ihrer Endmontageposition stark vereinfacht sowie kosten-und zeitsparend ist.

Zudem wird der Einsatz von schwerem Arbeitsgerät oder die besondere Auf-oder Vorbereitung der Transportwege unnötig und kann daher bei dem erfindungsgemäßen Verfahren entfallen, was auch den Untergrund und damit eventuell vorhandene Dachaufbauten oder Vegetation schont.

Erfindungsgemäß sieht das Verfahren zudem vor, dass an der Endmontageposition die zumindest eine Verschiebevorrichtung von der zumindest einen Modulbaugruppe entfernt wird.

Eine vorteilhafte Weiterbildung sieht dabei insbesondere vor, dass die Vormontageposition an einem entlang der Längsrichtung der Längsträger endseitigen Abschnitt der Längsträger und vorzugsweise unmittelbar zu einem Ende der Längsträger in Längsrichtung angeordnet bzw. positioniert ist. Alternativ kann die Vormontageposition jedoch auch an einem anderen leicht zugänglichen Abschnitt der Längsträger liegen.

Eine besonders vorteilhafte Variante des Verfahrens sieht vor, dass nacheinander mehrere Modulbaugruppen der Vielzahl von Modulbaugruppen an der Vormontageposition montiert und dabei gemeinsam immer weiter entlang der Längsträger in Richtung ihrer jeweiligen Endmontageposition geschoben werden. Hierfür ist vorgesehen, dass eine erste Modulbaugruppe der Vielzahl von Modulbaugruppen an der Vormontageposition in ihrer vorbestimmten Anordnung an den Längsträgern ausgerichtet und auf einer ersten Verschiebevorrichtung angeordnet wird. Anschließend wird die erste Modulbaugruppe mit der ersten Verschiebevorrichtung entlang der Längsrichtung von der Vormontageposition um zumindest eine Breite der ersten Modulbaugruppe entlang der Längsrichtung und vorzugsweise in Richtung ihrer Endmontageposition auf eine Zwischenposition verschoben. Wird dadurch die Vormontageposition wieder frei, wird auf dieser die nächste Modulbaugruppe angeordnet, wodurch sich ergibt, dass eine vorbestimmte Anzahl weiterer Modulbaugruppen der Vielzahl von Modulbaugruppen nacheinander an der Vormontageposition in ihrer vorbestimmten Anordnung an den Längsträgern ausgerichtet und auf einer jeweiligen Verschiebevorrichtungen angeordnet werden. Zudem werden die weiteren Modulbaugruppen jeweils gegenüber der jeweils vorangehenden auf der Zwischenposition angeordneten Modulbaugruppe ausgerichtet und vorzugsweise an der in der Zwischenposition vorangehenden Modulbaugruppe fixiert. Dann wird die jeweils auf der Vormontageposition angeordnete Modulbaugruppe in die Zwischenposition verschoben, wodurch die jeweils bereits vorangehende(n) und zuvor auf der Zwischenposition angeordnete(n) Modulbaugruppe(n) mit verschoben wird/werden, bis die Modulbaugruppen der Vielzahl von Modulbaugruppen sich auf ihrer jeweiligen Endmontageposition befinden. Alternativ können die Modulbaugruppen, also die vorbestimmte Anzahl weiterer Modulbaugruppen und die erste Modulbaugruppe, auch als Einheit gemeinsam auf ihre jeweilige Endmontageposition verschoben werden, sobald die vorbestimmte Anzahl weiterer Modulbaugruppen nacheinander auf der Vormontageposition angeordnet bzw. vormontiert wurden. Durch den beschriebenen schrittweisen Aufbau der einzelnen Modulbaugruppen auf der Vormontageposition und die Verschiebung der benachbart und vorzugsweise aneinander fixiert angeordneten Modulbaugruppen ergibt sich eine besonders einfache Konstruktion, bei welcher das gesonderte Verschieben einzelner Modulbaugruppen über weite Strecken entfällt. Die Längsträger werden dabei wie ein Magazin von der Vormontageposition aus mit den Modulbaugruppen befüllt, bis die Modulbaugruppen jeweils auf ihrer Endmontageposition angelangt sind.

Die Endmontageposition der zumindest einen Modulbaugruppe ist bei einer vorteilhaften Variante zudem jeweils unmittelbar benachbart zu einer bereits an den Längsträgern fixierten bzw. bereits an den Längsträgern montierten Modulbaugruppe positioniert, sodass die zumindest eine an der Vormontageposition auf der zumindest einen Verschiebevorrichtung bzw. an den Längsträgern angeordnete Modulbaugruppe mit der Verschiebevorrichtung auf den Längsträgern an der bereits fixierten Modulbaugruppe verschoben wird. Anschließend wird die zumindest eine Modulbaugruppe auf seiner Endmontageposition an bzw. gegenüber der jeweils benachbarten bereits fixierten Modulbaugruppe ausgerichtet.

Bei der Montage zumindest einer Modulbaugruppe auf den Längsträgern, bei welcher noch keine anderen Modulbaugruppen auf den Längsträgern fixiert sind, ist die Endmontageposition vorzugsweise an einer Endmontageposition angeordnet, welche an einem endseitigen Abschnitt der Längsträger angeordnet ist, die dem endseitigen Abschnitt der Vormontageposition gegenüberliegt, so dass die Vormontageposition und die Endmontageposition entlang der Längsrichtung der Längsträger beabstandet sind. Alternativ kann die Endmontageposition beispielsweise in der Mitte der Längsträger entlang der Längsrichtung der Längsträger positioniert sein, wodurch die Montage mittels zweier Vormontagepositionen möglich wird, die sich jeweils bezüglich der Endmontageposition gegenüberliegend angeordnet sind.

Neben der mittelbaren Fixierung der Modulbaugruppen auf ihrer Endmontageposition über die Längsträger aneinander, wird die zumindest eine Modulbaugruppe bei einer vorteilhaften Weiterbildung auf seiner Endmontageposition an der jeweils benachbarten, bereits fixierten Modulbaugruppe fixiert bzw. vorzugsweise unmittelbar fixiert.

Die Modulbaugruppen können beispielsweise als Baueinheit antransportiert und an der Vormontageposition auf die Verschiebevorrichtung bzw. auf den Längsträgern angeordnet und zu diesen ausgerichtet werden.

Erfindungsgemäß ist dabei vorgesehen, dass eine Modulbaugruppe jeweils aus zwei Querträgern und einer Vielzahl von sich zwischen den Querträgern erstreckenden Modulen gebildet ist. Vorzugsweise umfasst die Modulbaugruppe zwischen einem und sechs Module, welche insbesondere im Querformat angeordnet sind und mit ihren Endabschnitten entlang ihrer Längsrichtung entlang der Längsträger an den Querträgern fixiert sind. Die Fixierung kann hierbei beispielsweise durch Rast- oder Klammerelemente umgesetzt sein, mit denen die einzelnen Module an den Querträgern in vorbestimmten Positionen fixiert werden können. Bei dem Verfahren werden die Querträger erfindungsgemäß an der Vormontageposition auf der Verschiebevorrichtung oder die Verschiebevorrichtung an der Vormontageposition an den Querträgern angeordnet. Hiervon wird auch insbesondere umfasst, dass eine Verschiebevorrichtung an einem Querträger angebracht und dann der Querträger mit der Verschiebevorrichtung auf den Längsträgern angeordnet wird. Die Querträger werden zudem in einem in Längsrichtung entlang der Längsträger vorbestimmten Abstand zueinander angeordnet und ausgerichtet. Vorzugsweise werden die Querträger dabei nicht nur zueinander, sondern zu den Längsträgern ausgerichtet, sodass diese insbesondere orthogonal zu den Längsträgern verlaufen und die Querträger sich quer zu den Längsträgern mit einem vorbestimmten Maß über die Längsträger hinaus erstrecken. Anschließend werden die Module der Vielzahl von Modulen gemäß dem Verfahren an der Vormontageposition an den Querträgern ausgerichtet und fixiert.

Werden an der Vormontageposition mehrere Modulbaugruppen bzw. zumindest zwei Modulbaugruppen angeordnet, grenzen diese unmittelbar aneinander an bzw. sind unmittelbar zueinander benachbart. Eine vorteilhafte Weiterbildung sieht daher vor, dass die zwei aneinander angrenzenden Modulbaugruppen einen gemeinsamen Querträger aufweisen. Der gemeinsame Querträger ist vorzugsweise an dem Übergang zwischen den beiden Modulbaugruppen ausgebildet. Zwei benachbarte Modulbaugruppen weisen somit drei Querträger auf. Entsprechend weisen n Modulbaugruppen n+1 Querträger auf, da sich immer zwei benachbarte Modulbaugruppen einen Querträger teilen bzw. einen gemeinsamen Querträger aufweisen. Um für die einzelnen Module der beiden Modulträger jeweils klar bestimmte Auflageflächen bereitzustellen, kann sich ein Mittelsteg auf einer zu den Modulen gewandten Auflagefläche des gemeinsamen Querträgers erstrecken, welcher die Auflagefläche entlang einer orthogonal zu der Längsrichtung der Längsträger verlaufenden Querrichtung symmetrisch teilt.

Werden an der Vormontageposition einzelne Modulbaugruppen angeordnet bzw. vormontiert und auf die Endmontageposition verschoben, können die Querträger der einzelnen Modulbaugruppen ebenfalls einen entlang einer orthogonal zu der Längsrichtung der Längsträger verlaufenden Querrichtung und zu der Längsrichtung orthogonalen Symmetrieebene halbierten Querschnitt gegenüber den gemeinsamen Querträgern aufweisen, so dass zwei an der Endmontageposition aneinander angrenzende in ihrem Querschnitt halbierte Querträger aneinander in ihren Querschnitt zu einem Querschnitt der gemeinsamen Querträger ergänzen.

Eine weitere vorteilhafte Ausbildungsvariante des Verfahrens sieht zudem vor, dass die Module Photovoltaikmodule sind. Die Photovoltaikmodule weisen jeweils zumindest einen elektrischen Anschluss auf. Bei dem Verfahren ist hierbei vorgesehen, dass die elektrischen Anschlüsse der Module einer Modulbaugruppe an der Vormontageposition miteinander verbunden werden. Alternativ oder zusätzlich werden zudem die elektrischen Anschlüsse der Module benachbarter Modulbaugruppen, die auf der Vormontageposition unmittelbar benachbart angeordnet sind, an der Vormontageposition miteinander verbunden. Darüber hinaus, werden alternativ oder zusätzlich die elektrischen Anschlüsse der Module benachbarter Modulbaugruppen, die an der Endmontageposition unmittelbar benachbart sind, an der Endmontageposition miteinander verbunden. Durch das Verbinden der elektrischen Anschlüsse auf der Vormontageposition wird die Montage an der Endmontageposition weiter vereinfacht und teilweise unnötig, da an der Endmontageposition neben dem Fixieren der Querträger an den Längsträgern lediglich noch die elektrische Verbindung mit den an den Endmontagepositionen bereits vorhandenen bzw. dort benachbarten Module der dortigen Modulbaugruppen hergestellt werden muss.

Hierfür kann bei einer weiteren Variante zudem vorgesehen sein, dass die elektrischen Anschlüsse an der Modulbaugruppe in einem Anschlusshalter fixiert und mit ihren elektrischen Kontakten in Längsrichtung der Längsträger ausgerichtet sind, sodass die Verschiebung der Modultbaugruppe beim Anordnen der Modulbaugruppe in ihrer Endmontageposition zugleich eine Steckbewegung ist, bei der die in dem Anschlusshalter fixierten Anschlüsse in Anschlüsse des an der Endmontageposition benachbarten Modulbaugruppe eingesteckt und die Modulbaugruppe durch die Verschiebung auf die Endmontageposition automatisch kontaktiert werden.

Für das Verfahren vorteilhaft sieht eine Weiterbildung zudem vor, dass die Verschiebevorrichtung aus einem ersten, auf einem ersten der zwei Längsträger anordenbaren und entlang des ersten Längsträgers verschiebbaren Rollenwagen und einem zweiten, auf einem zweiten der zwei Längsträger anordenbaren und entlang des zweiten Längsträgers verschiebbaren Rollenwagen gebildet ist. Die Rollenwagen werden vorzugsweise an den Längsträgern geführt und sind miteinander lediglich über die Querträger, an denen sie angeordnet werden können, bzw. über die Längsträger und den Untergrund miteinander verbunden, sodass zwischen den beiden Rollenwägen keine unmittelbare Verbindung besteht. Alternativ können die Rollenwägen jedoch auch miteinander verbunden sein, um beispielsweise ein Verschieben von der Endmontageposition zu der Vormontageposition ohne einen Modulbaugruppe zu vereinfachen. Darüber hinaus ist bei einer Variante, bei welcher zumindest ein Rollenwagen durch einen Aktor angetrieben wird, möglich, dass zumindest einer der Rollenwägen eine Steuerung aufweist und die Rollenwägen steuerungstechnisch verbunden sind.

Die Längsträger weisen in eine zu der Längsrichtung orthogonale Querrichtung einen im Wesentlichen gleichbleibenden Abstand auf. Um jedoch ein Verklemmen der Verschiebevorrichtung bei einem sich entlang der Längsträger ändernden Abstand zu vermeiden, kann zudem einer der Rollenwägen gegenüber der Modulbaugruppe als Festlager und der jeweils andere Rollenwagen als Loslager ausgebildet sein, so dass die Modulbaugruppe sich gegenüber einem der Rollenwägen in Querrichtung verschieben kann aber von diesem weiter gestützt wird. Eine solche Loslagerung kann beispielsweise durch ein bewegbares Element gebildet werden, mit welchem sich die Auflageflächen der Querträger an dem jeweiligen Rollenwagen in Querrichtung, nicht jedoch in Längsrichtung verschieben kann.

Um die Rollenwägen platzsparend transportieren und materialsparend ausbilden zu können sowie zugleich ein einfaches Anordnen der Rollenwägen an den Längsträgern bzw. Entfernen der Rollenwägen von den Längsträgern zu ermöglichen, sieht eine weitere vorteilhafte Variante zudem vor, dass der erste und der zweite Rollenwagen einer ersten Verschiebevorrichtung an einem ersten Querträger und der erste und der zweite Rollenwagen einer zweiten Verschiebevorrichtung an einem zweiten Querträger einer Modulbaugruppe anordenbar sind und an dem jeweiligen Querträger angeordnet werden. Bei dem Verfahren wird daher entweder der jeweilige Rollenwagen an dem jeweiligen Querträger oder der jeweilige Querträger an dem auf dem Längsträger platzierten jeweiligen Rollenwagen angeordnet. Ein Abstand zwischen dem ersten und dem zweiten Querträgern der Modulbaugruppe ist durch ein sich entlang des jeweiligen Längsträgers zwischen den jeweiligen Rollenwägen erstreckenden Abstandshalteelement einstellbar. Bei dem Verfahren wird der Abstand zwischen den Querträgern an der Vormontageposition mit dem Abstandshalteelement eingestellt und an der Vormontageposition gehalten. Nach dem Einstellen des Abstands können die Module einfach an der Vormontageposition an den Querträgern angeordnet und fixiert werden, ohne dass sich der Abstand durch ein Verrutschen oder Verschieben der Querträger ändern kann, wodurch es zu einer Beschädigung der Module kommen könnte. Wird der Abstand durch die Montage der Module auf den Querträgern durch die Module selbst gehalten, so dass das Abstandshalteelement zum Halten des Abstands nicht mehr nötig ist, sieht eine vorteilhafte Ausführungsform vor, dass das Abstandshalteelement entfernt wird.

Sollen mit den Rollenwägen mehrere miteinander verbundene Modulbaugruppen von der Vormontageposition auf die Endmontageposition bewegt werden, wird vorzugsweise jeweils ein Querträger und insbesondere auch ein gemeinsamer Querträger zweier Modulbaugruppen durch jeweils zwei Rollenwägen gestützt, sodass jeder Querträger der Modulbaugruppen durch die jeweiligen Rollenwägen an den Längsträgern geführt und gegenüber diesen abgestützt ist.

Zur Fixierung der Längsträger an dem Untergrund sieht eine vorteilhafte Weiterbildung vor, dass die Längsträger in vorbestimmten Abständen mit Stützpfosten an dem Untergrund verankert sind.

Die Längsträger können zudem mehrteilig ausgebildet sein. Ein Verbindungselement, das die einzelnen Teilstücke der Längsträger verbindet, ist vorzugsweise nicht auf einer von dem Untergrund weg weisenden Seite des Längsträgers sondern auf einer zu dem Längsträger hinweisenden Seite angeordnet, welche eine Lauffläche für die Verschiebevorrichtung bildet, sodass eine Verschiebung der Verschiebevorrichtung an den Längsträgern durch die Verbindungselemente nicht behindert wird. Alternativ ist das Verbindungselement in den Längsträger versenkt, sodass das Verbindungselement selbst ein Teil der Lauffläche oder einen Teil einer Führungsfläche bildet, an welcher der jeweilige Rollenwagen geführt wird.

Die Längsträger können durch die Stützpfosten jeweils in einem gleichbleibenden Abstand zu dem Untergrund angeordnet sein oder eine gleichbleibende Höhe über dem Meeresspiegel aufweisen, wobei die zwei Längsträger eine sich vorzugsweise unterscheidende Höhe über dem Meeresspiegel aufweisen, sodass einer der Längsträger höher als der andere Längsträger verläuft bzw. angeordnet ist und die Modulbaugruppen dadurch gegenüber einem waagrechten Untergrund schräg angeordnet werden bzw. sind.

Nach der Endmontage der zumindest einen Modulbaugruppe an der Endmontageposition bzw. nach dem Fixieren der zumindest einen Modulbaugruppe an seiner Endmontageposition an den Längsträgern sieht eine vorteilhafte Weiterbildung vor, dass die Verschiebevorrichtung nach dem Entfernen bzw. Lösen von der zumindest einen Modulbaugruppe ohne die zumindest einen Modulbaugruppe von der Endmontageposition auf die Vormontageposition zurückbewegt wird, wobei die Verschiebevorrichtung vorzugsweise an den Längsträgern zu der Vormontageposition zurück verschoben wird. Alternativ kann die Verschiebevorrichtung jedoch auch von den Längsträgern gelöst und zu der Vormontageposition zurück bewegt werden. Anschließend wird bei dem Verfahren auf der Vormontageposition zumindest eine weiterer Modulbaugruppe der Vielzahl von Modulbaugruppen auf der Verschiebevorrichtung angeordnet, sodass die zumindest eine weitere Modulbaugruppe wiederum von der Vormontageposition zu seiner an die zumindest einen zuvor verschobenen Modulbaugruppe angrenzenden Endmontageposition verschoben und dort an die Längsträger fixiert werden kann.

Ein weiterer Aspekt der Erfindung betrifft die Verschiebevorrichtung zur Durchführung des erfindungsgemäßen Montageverfahrens. Die Verschiebevorrichtung ist aus zwei voneinander getrennten Rollenwägen gebildet, die jeweils auf einem der Längsträger der Modulbaugruppenkonstruktion anordenbar sind. Die Rollenwägen sind jeweils an einem Querträger einer Modulbaugruppe anordenbar und vorzugsweise von der Vormontage bis zur Endmontage vorübergehend oder alternativ dauerhaft an dem jeweiligen Querträger fixierbar. Die zwei Rollenwägen weisen zudem jeweils zumindest eine Rolle zum Abrollen auf dem jeweiligen Längsträger und vorzugsweise auf der von dem Untergrund wegweisenden Lauffläche des Längsträgers auf sowie jeweils zumindest ein Führungselement zur Führung entlang des jeweiligen Längsträgers. Vorzugsweise wird der jeweilige Rollenwagen durch sein Führungselement an einer Führungsfläche geführt, welche mit der Lauffläche einen Winkel einschließt und sich entlang der Längsrichtung der Längsträger erstreckt. Das Führungselement kann beispielsweise ebenfalls eine Rolle sein, welche an der Führungsfläche des jeweiligen Längsträgers anliegt und auf ihr abrollt. Alternativ kann das Führungselement auch durch die in Querrichtung weisenden Seitenflächen der Rolle des Rollenwagens bereitgestellt werden, welche auf der Lauffläche abrollt. Darüber hinaus ist an den Rollenwägen ein Abstandshalteelement anordenbar, durch das ein vorbestimmter Abstand zwischen zwei Querträgern einer Modulbaugruppe an der Vormontageposition eingestellt und gehalten wird.

Bei einer vorteilhaften Variante kann zumindest einer der Rollenwägen durch einen Aktor angetrieben sein, sodass sich die Rollenwägen über zumindest eine Modulbaugruppe miteinander verbunden und durch den Aktor angetrieben automatisch entlang der Längsträger bewegen können. Dabei kann vorgesehen sein, dass ein Sensor das Erreichen der Endposition ermittelt und den Aktor automatisch abschaltet um die Verschiebung bzw. Bewegung entlang der Längsrichtung zu stoppen. Der Sensor kann beispielsweise ein Drucktaster sein, welcher durch ein Anschlagen der Verschiebevorrichtung an einer bereits an dem Längsträger fixierten Modulbaugruppe das Erreichen der Endmontageposition erkennt.

Ein weiterer Aspekt der Erfindung betrifft zudem die Verwendung einer solchen Verschiebevorrichtung für ein erfindungsgemäßes Montageverfahren.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivisch dargestellte Modulbaugruppenkonstruktion;
- Fig. 2: eine Modulbaugruppenkonstruktion in einer seitlichen Ansicht;
- Fig. 3: eine einzelne an der Vormontageposition angeordnete Modulbaugruppe;
- Fig. 4: zwei an der Vormontageposition benachbart angeordnete und miteinander verbundene Modulbaugruppen;
- Fig. 5a - 5f: jeweils einen Schritt eines Montageverfahrens;
- Fig.6: Rollenwägen einer Verschiebevorrichtung;
- Fig. 7: Rollenwägen einer alternativen Verschiebevorrichtung.

Die Figuren sind beispielhaft schematisch. Gleiche Bezugszeichen in den Figuren weisen auf gleiche funktionale und/oder strukturelle Merkmale hin.

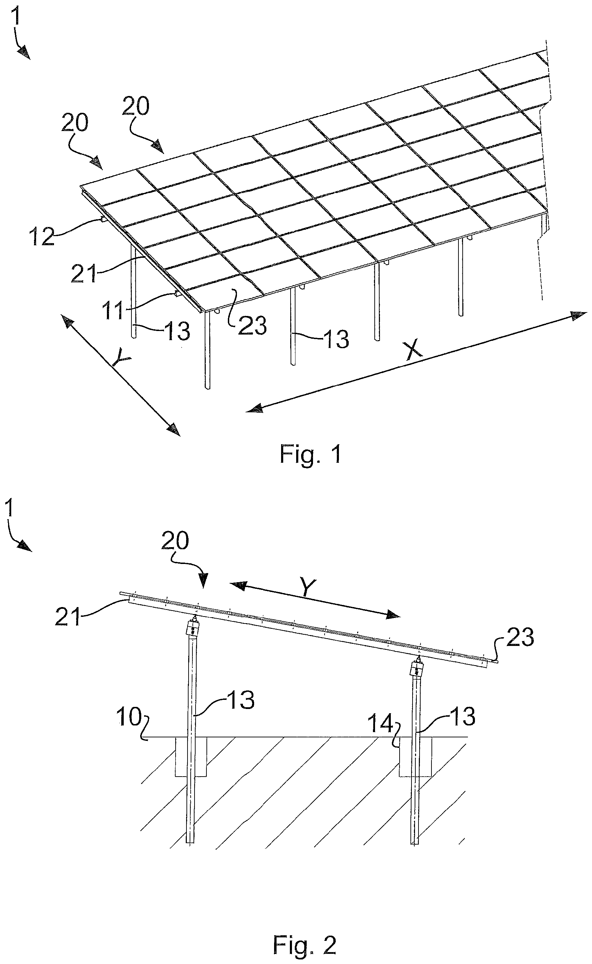

Figur 1 zeigt eine Modulbaugruppenkonstruktion 1 bzw. eine Photovoltaikanlage in einer perspektivischen Darstellung. Die Modulbaugruppenkonstruktion 1 wird im Wesentlichen aus zwei sich in ihre Längsrichtung X erstreckenden Längsträger 11, 12 gebildet, welche in regelmäßigen Abständen durch Stützpfosten 13 an oder in einem Untergrund 10 verankert bzw. fixiert sind, sowie auf den Längsträgern 11, 12 angeordnete Modulbaugruppen 20, welche mit ihrer Haupterstreckungsrichtung in einer Querrichtung Y quer zu den Längsträgern 10, 11 verlaufen. Die Modulbaugruppen 20 umfassen jeweils zwei Querträger 21, 22, die an den Längsträgern 11, 12 fixiert sind und sich bei dem gezeigten Ausführungsbeispiel um eine vorbestimmte Strecke in Querrichtung Y über die zwischen den Längsträgern 11, 12 aufgespannte Fläche hinaus erstrecken. An den Querträgern 21, 22, von denen in Figur 1 lediglich der erste Querträger 21 der ersten Modulbaugruppe 20 sichtbar ist, sind die einzelnen Module 23 einer Modulbaugruppe 20 angeordnet und fixiert. Die Modulbaugruppen 20 umfassen bei der dargestellten Variante der Modulbaugruppenkonstruktion 1 jeweils sechs Module 23, welche im Querformat und sich mit ihrer Haupterstreckungsrichtung von dem jeweils ersten Querträger 21 zu dem jeweils zweiten Querträger 22 erstreckend, an den beiden Querträgern 21, 22 einer Modulbaugruppe 20 fixiert sind. Die Querträger 21, 22 verlaufen jeweils entlang der Querrichtung Y orthogonal zu den Längsträgern 11, 12 bzw. zu deren Längsrichtung X. Die Modulbaugruppenkonstruktion 1 ist in Figur 1 lediglich ausschnittsweise dargestellt, sodass ein in der Bildebene linksseitig dargestellter endseitiger Abschnitt der Modulbaugruppenkonstruktion 1 bzw. des ersten und zweiten Längsträgers 11, 12 gezeigt ist.

In Figur 2 ist eine seitliche Ansicht auf den endseitigen Abschnitt einer solchen Modulbaugruppenkonstruktion 1 abgebildet. Die Längsträger 11, 12 werden mit den Stützpfosten 13 im Boden bzw. im Untergrund 10 verankert, wobei sich die Stützpfosten 13 in den Untergrund 10 hinein erstrecken und beispielsweise in den Untergrund 10 gerammt sind oder, wie bei dieser Ausführungsform dargestellt, mit einem Fundament 14 im Untergrund 10 verankert sind. Darüber hinaus werden die Längsträger 11, 12 in Figur 2 durch endseitig an den Längsträgern 11, 12 angeordnete Abschlusselemente verdeckt.

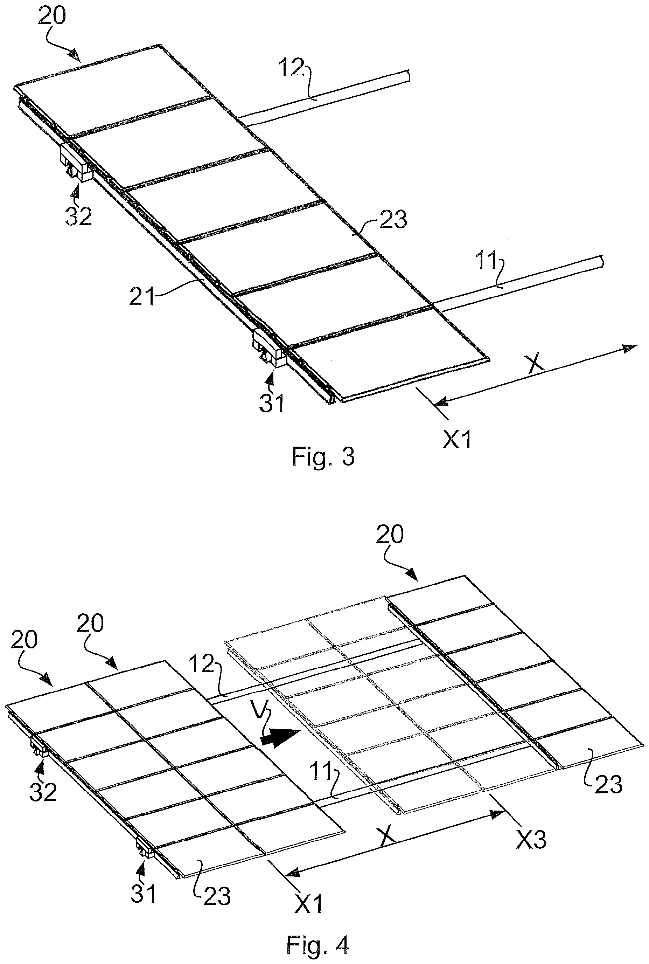

Um die Montage einer Modulbaugruppenkonstruktion 1 bzw. einer Photovoltaikanlage, wie sie in Figur 1 dargestellt ist, zu vereinfachen und die einzelnen Querträger 21, 22 sowie Module 23 einer Modulbaugruppe 20 bzw. die gesamten bereits vormontierten Modulbaugruppen 20 nicht entlang ungeeigneter Transportwege mit schwerem Arbeitsgerät oder von Hand an die jeweilige Endmontageposition X3 transportieren zu müssen, sieht das Montageverfahren vor, ein oder mehrere Modulbaugruppen 20 an einer Vormontageposition X1, wie in Figur 3 dargestellt, auf einer auf den Längsträgern 11, 12 verschiebbaren Verschiebevorrichtung anzuordnen oder aus einzelnen Bauteilen vorzumontieren. Bei der herkömmlichen Montage einer Modulbaugruppenkonstruktion werden die Längsträger 11, 12 mit den Stützpfosten 13 ohnehin zunächst aufgebaut und im Untergrund 10 verankert. Bei dem Verfahren werden daher nacheinander die einzelnen Modulbaugruppen 20 oder mehrere miteinander verbundener Modulbaugruppen 20 an der Vormontageposition X1 vormontiert und dabei auf der Verschiebevorrichtung angeordnet und mit der Verschiebevorrichtung entlang der ohnehin vorhandenen Längsträger 11, 12, welche als Schienen für die Verschiebevorrichtung genutzt werden, auf ihre jeweilige Endmontageposition X3 verschoben. An der Endmontageposition X3 werden die Modulbaugruppen 20 auf den Längsträgern 11, 12 abgesetzt und mit ihnen verbunden bzw. an ihnen fixiert oder alternativ zusammen mit den Verschiebevorrichtungen an den Längsträgern fixiert bzw. montiert. In Figur 3 ist eine einzelne Modulbaugruppe 20 an der Vormontageposition X1 auf mehreren Rollenwägen 31, 32 angeordnet, wobei nur ein erster und ein zweiter Rollenwagen 31, 32 gezeigt sind, auf denen der erste Querträger 21 der Modulbaugruppe 20 auf den beiden Längsträgern 11, 12 verschiebbar gelagert ist. Der erste Rollenwagen 31 ist auf dem ersten Längsträger 11 entlang der Längsrichtung X und der zweite Rollenwagen 32 ist auf dem zweiten Längsträger 12 entlang der Längsrichtung X auf Rollen 36 verschiebbar, sodass die Modulbaugruppe 20 zusammen mit den nicht sichtbaren und durch die Modulbaugruppe 20 verdeckten Rollenwägen des zweiten Querträgers 22 ohne wesentliche Kraftanstrengung und ohne zusätzliche Transportmittel beispielsweise von Hand entlang der Längsträger 11, 12 verschoben werden kann.

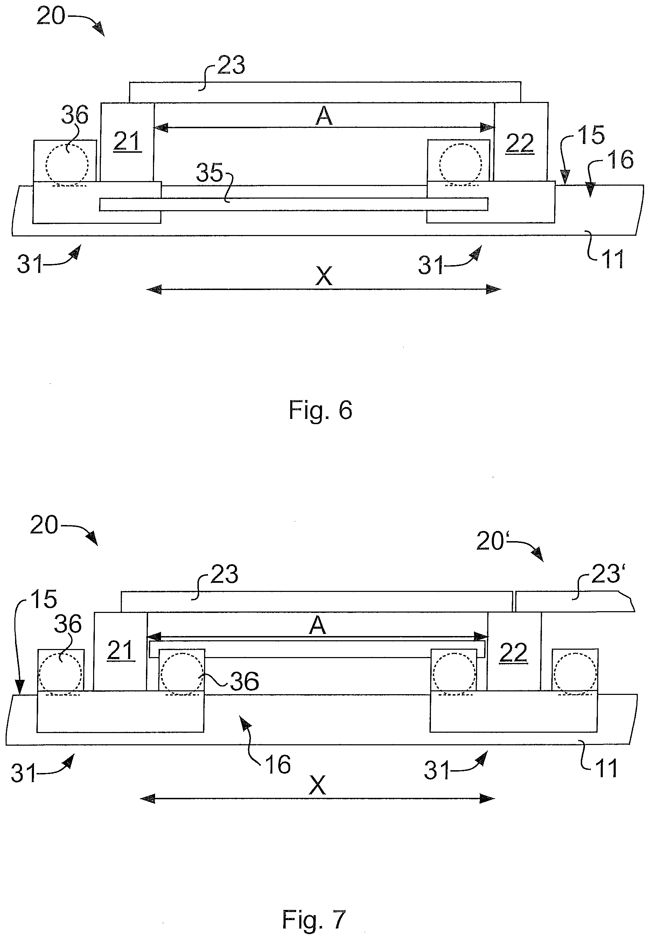

Bei der in Figur 4 gezeigten Ausführungsvariante werden zwei Modulbaugruppen 20 nebeneinander auf der Vormontageposition X1 auf der Verschiebevorrichtung bzw. auf den Rollenwägen 31, 32 aufgebaut. Bei dem Verfahren werden vorzugsweise zunächst die Rollenwägen 31, 32 an einem jeweiligen Querträger 21, 22 fixiert und die Querträger 21, 22 mit den Rollenwägen 31, 32 auf den Längsträgern 11, 12 angeordnet. Anschließend werden die Querträger 21, 22 in einem vorbestimmten Abstand A zueinander ausgerichtet und die einzelnen Module 23 auf den Querträgern 21, 22 fixiert, wodurch die Modulbaugruppen 20 auf den Rollenwägen 31, 32 vormontiert. Die Querträger 21, 22 werden dazu in dem vorbestimmten Abstand A, wie er beispielsweise in Figur 6 gekennzeichnet ist, zueinander auf den Rollenwägen 31, 32 ausgerichtet und die Rollenwägen 31, 32, wie beispielsweise in Figur 6 und 7 gezeigt, durch ein Abstandshalteelement 35 zumindest in der Vormontageposition so zueinander fixiert, dass der vorbestimmte Abstand A zumindest während der Montage der einzelnen Module 23 auf den Querträgern 21, 22 beibehalten wird. Dadurch ändert sich der vorbestimmte Abstand A zunächst durch das Abstandshalteelement und anschließend durch die Module 23 nicht, sodass sich der Abstand A bis zur Endmontage an der Endmontageposition X3 nicht mehr ändern kann. Die einzelnen Module 23 werden bei der Vormontage auf den Querträgern 21, 22 angeordnet und beispielsweise über Klammern an diesen fixiert. Die Vormontageposition X1 ist vorzugsweise, wie in den Figuren 3 und 4 dargestellt, unmittelbar an oder benachbart zu einem jeweils endseitigen Abschnitt der Längsträger 11, 12 angeordnet, wobei die Endmontageposition X1 sich nach jeder Endmontage einer Modulbaugruppe 20 für die nächste Modulbaugruppe 20 verschiebt und jeweils wie in Figur 4 dargestellt neben einer bereits an den Längsträgern 11, 12 bei der Endmontage fixierten Modulbaugruppe 20 positioniert ist. Nach der Vormontage der Modulbaugruppe 20 an der Vormontageposition X1 werden die Modulbaugruppen 20 gemeinsam auf den Rollenwägen 31, 32 der Verschiebevorrichtung entlang der Längsrichtung X durch eine Verschiebebewegung V entlang der Längsrichtung X auf die Endmontageposition X3 verschoben, dort auf den Längsträgern 11, 12 abgesetzt und fixiert oder zusammen mit der Verschiebevorrichtung an den Längsträgern fixiert. Die beiden an der Vormontageposition X1 unmittelbar benachbart aufgebauten Modulbaugruppen 20 weisen jeweils zwei Querträger 21, 22 auf, wobei die beiden aneinander angrenzenden Querträger 21, 22 der beiden Modul 20, welche bei den beiden Modulbaugruppen 20 in Figur 4 in deren gemeinsamen Mitte liegen, integral miteinander ausgebildet sind, sodass auf einer ersten Seite des integral aufgebauten Querträgers die Module 23 einer der Modulbaugruppen 20 aufliegen und auf der zweiten Seite des integral aufgebauten Querträgers die Module 23 einer zweiten Modulbaugruppe 20 aufliegen.

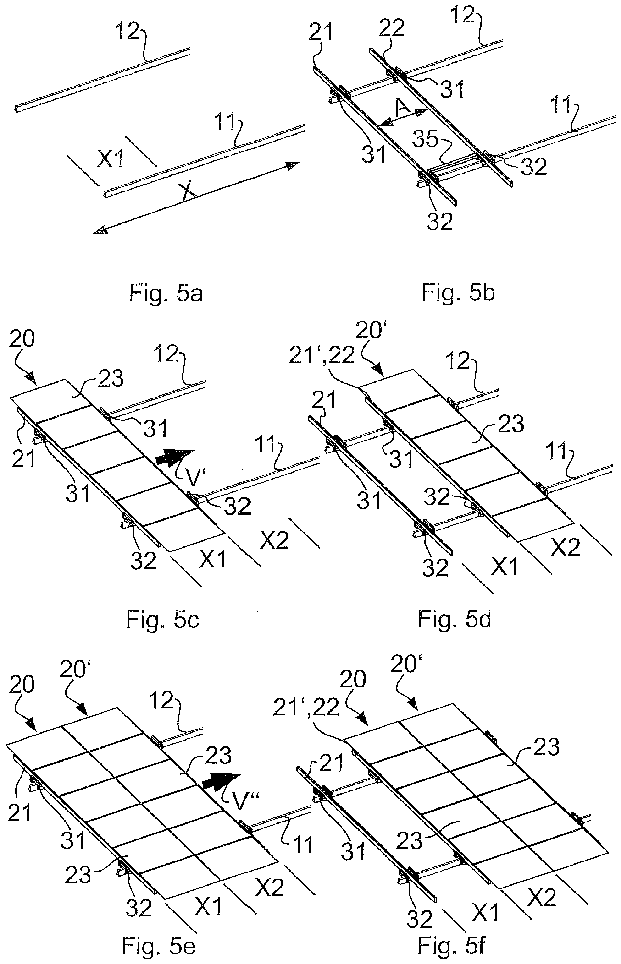

Die Figur 5a bis 5f zeigen Schritte einer weiteren besonders vorteilhaften Variante des erfindungsgemäßen Montageverfahrens. In Figur 5a sind die beiden Längsträger gezeigt, die sich jeweils entlang ihrer Längsrichtung X von einem in der Bildebene links angeordneten endseitigen Abschnitt erstrecken. Die gezeigte Verfahrensvariante sieht vor, dass auf der Vormontageposition X1 eine Modulbaugruppe 20 angeordnet wird. Da die Modulbaugruppen 20 jeweils entlang der Längsrichtung X verlaufen, ist die Vormontageposition X1 nicht als einzelner Punkt, sondern als ein Abschnitt entlang der Längsrichtung X der Längsträger 11, 12 zu sehen, wobei die Vormontageposition X1, wie in Figur 5a sichtbar, unmittelbar an den endseitigen Abschnitt der Längsträger 11, 12 angrenzt.

Auf die Längsträger 11, 12 werden, wie in Figur 5b dargestellt, zwei Querträger 21, 22 angeordnet, an welchen jeweils ein erster Rollenwagen 31 und ein zweiter Rollenwagen 32 befestigt wurde. Um anschließend einzelne Module 23 auf den Querträgern 21, 22 anordnen zu können, müssen die Querträger 21, 22 einen vorbestimmten Abstand A zueinander aufweisen. Um diesen Abstand A einzustellen und den Abstand A während der Montage der einzelnen Module 23 auf den Querträgern zu halten, wird bei der gezeigten Variante ein Abstandshalteelement 35 zwischen den beiden zweiten Rollenwägen 32 angeordnet, dass beispielsweise in die zweiten Rollenwägen 32 eingerastet oder eingehängt wird. Zusätzlich kann auch ein weiteres Abstandshalteelement zwischen den beiden ersten Rollenwägen 31 angeordnet werden.

Wurde der Abstand A zwischen den Querträgern eingestellt, werden wie in Figur 5c gezeigt einzelne Module 23 auf den Querträgern 21, 22 angeordnet und beispielsweise durch Klammern an ihnen fixiert. Durch das Fixieren der Module 23 an den Querträgern 21, 22 wird der Abstand zwischen den Querträgern 21, 22 durch die Module 23 gehalten, so dass das Abstandshalteelement 35 nicht mehr nötig ist und entfernt werden kann. Durch das Anordnen der Querträger 21, 22 mit den jeweiligen Rollenwägen 31,32 auf den Längsträgern 11, 12 und die Montage der einzelnen Module 23 auf den Querträgern 21, 22 wurde die Modulbaugruppe 20 auf der Vormontageposition X1 angeordnet. Anschließend wird die Modulbaugruppe 20 durch die in Figur 5c gezeigte Verschiebebewegung V' auf den Rollenwägen 31, 32 entlang der Längsträger 11, 12 in Richtung der Endmontageposition X3 der Modulbaugruppe 20 auf eine Zwischenposition X2 verschoben, welche unmittelbar benachbart zu der Vormontageposition X1 ist bzw. deren Bereich unmittelbar benachbart zu dem Bereich der Vormontageposition X1 angeordnet ist.

Durch die Verschiebebewegung V' aus Figur 5c wird die Vormontageposition X1 frei, wobei der erste Querträger 21' der soeben verschobenen Modulbaugruppe 20' als zweiter Querträger 22 für eine weitere Modulbaugruppe 20 fungiert, welche anschließend auf der Vormontageposition X1 angeordnet wird. Dazu wird ein weiterer erster Querträger 21 in dem vorbestimmten Abstand A zu seinem zweiten Querträger 22 bzw. zu dem ersten Querträger 21' der soeben verschobenen Modulbaugruppe 20' angeordnet. Anschließend werden auf den beiden Querträgern 21, 22 und wie in Figur 5e gezeigt einzelne Module 23 angeordnet und an den Querträgern 21, 22 fixiert.

Die soeben auf den Längsträgern 11, 12 angeordnete Modulbaugruppe 20 und die bereits zuvor auf den Längsträgern 11, 12 angeordnete und verschobene Modulbaugruppe 20' sind über den gemeinsamen Querträger 21', 22 miteinander verbunden. Anschließend wird die Modulbaugruppe 20 durch eine weitere Verschiebebewegung V" der Modulbaugruppe 20 entlang der Längsträger 11, 12 in Richtung ihrer Endmontageposition X3 auf die Zwischenposition X2 bewegt, wodurch zugleich die zuvor verschobene Modulbaugruppe 20' weiter verschoben wird und ihrer Endmontageposition X3 näher rückt. Die Endmontagepositionen X3 der Modulbaugruppen 20, 20' liegen an einem in der Bildebene rechtseitigen, nicht gezeigten endseitigen Abschnitt der Längsträger 11, 12. In Figur 5f ist die Vormontageposition X1 bzw. der Bereich der Vormontageposition X1 für die Vormontage der nächsten Modulbaugruppe frei, welche wiederum einen gemeinsamen Querträger 21', 22 mit der unmittelbar benachbarten in der Zwischenposition X2 angeordneten Modulbaugruppe 20 aufweist. Durch eine Wiederholung der Schritte entsteht eine Kette bzw. Reihe von miteinander jeweils über einen gemeinsamen Querträger 21, 22 verbundenen Modulbaugruppen, welche durch das Anordnen der Modulbaugruppen auf der Vormontageposition X1 und das anschließende Verschieben entlang der Längsträger 11, 12 immer weiter in Richtung ihrer Endmontageposition X3 verschoben werden, bis die einzelnen Modulbaugruppen auf ihrer jeweiligen Endmontageposition X3 angelangen. Figur 6 zeigt schematisch zwei erste Rollenwägen 31 einer Verschiebevorrichtung auf dem ersten Längsträger 11 mit einer darauf angeordneten Modulbaugruppe 20. Die Modulbaugruppe 20 liegt mit seinem ersten Querträger 21 auf einem ersten Rollenwagen 31 und mit seinem zweiten Querträger 22 auf einem weiteren ersten Rollenwagen 31 auf. Die ersten Rollenwägen 31 umfassen jeweils zumindest eine Rolle 36, welche als Laufrolle auf einer von dem Untergrund 10 weg weisenden Lauffläche 15 des Längsträgers 11 aufliegt bzw. sich bei einer Verschiebung des jeweiligen Rollenwagens 31 entlang der Längsrichtung X abrollt. Die ersten Rollenwägen 31 sind durch ein Abstandshaltelement 35 verbunden, mit dem ein Abstand zwischen den Rollenwägen 31 einstellbar ist, sodass die Querträger 21, 22 der Modulbaugruppe 20 in ihrem vorbestimmten Abstand A zueinander angeordnet werden können. Die ersten und zweiten Rollenwägen 31, 32 sind vorzugsweise gleich aufgebaut, so dass auch für die zweiten in Figur 6 nicht gezeigten Rollenwägen 32 gilt, dass zur Führung der Rollenwägen 31, 32 an den Längsträgern 11, 12 die Rollenwägen 31, 32 vorzugsweise jeweils nicht dargestellte Führungselemente vorsehen, welche den jeweiligen Rollenwagen 31, 32 gegen den jeweiligen Längsträger 11, 12 und vorzugsweise gegen eine der in der Darstellungsebene der Figur 6 liegende Führungsfläche 16 der Längsträger 11, 12 abstützen. Um die Modulbaugruppe 20 bzw. deren Querträger 21, 22 an der Endmontageposition auf den Längsträgern 11, 12 absetzten zu können, kann zudem vorgesehen sein, dass jeweils ein Element des ersten und zweiten Rollenwagens 31, 32, auf welchem die Querträger aufliegen, abgesenkt werden kann.

Figur 7 zeigt einen ähnlichen Aufbau der Rollenwägen 31, 32 wie in Figur 6, jedoch weisen die Rollenwägen 31, 32 und insbesondere die beiden darge-stellten ersten Rollenwägen 31 jeweils zwei Rollen 36 auf. Das Abstandshalteelement 35 ist einfach in die Rollenwägen 31 einhakbar und dadurch der Abstand A zwischen den Querträgern 21, 22 einstellbar. Ausschnittsweise sichtbar ist neben dem Modul 23 der Modulbaugruppe 20 auch ein Modul 23' einer unmittelbar benachbarten Modulbaugruppe 20'. Die beiden Modulbau-gruppen 20' weisen einen gemeinsamen Querträger auf.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Montageverfahren zur Montage einer Modulbaugruppenkonstruktion (1), insbesondere einer Photovoltaikanlage, aus zumindest zwei parallel verlaufenden Längsträgern (11, 12), die an einem Untergrund (10) fixiert sind, und einer Vielzahl an den Längsträgern (11, 12) zu montierenden Modulbaugruppen (20), wobei sich eine an den Längsträgern (11, 12) montierte Modulbaugruppe (20)jeweils diese miteinander verbindend quer zu den Längsträgern (11, 12) erstreckt, wobei
zumindest eine Modulbaugruppe (20) der Vielzahl von Modulbaugruppen an einer an den Längsträgern (11, 12) positionierten Vormontageposition (X1) in einer vorbestimmten Anordnung an den Längsträgern (11, 12) ausgerichtet und auf zumindest einer an den Längsträgern (11, 12) und entlang einer Längsrichtung (X) der Längsträger (11, 12) verschiebbaren Verschiebevorrichtung angeordnet wird,
die zumindest eine auf der zumindest einen Verschiebevorrichtung angeordnete Modulbaugruppe (20) mit der zumindest einen Verschiebevorrichtung entlang der Längsrichtung (X) der Längsträger (11, 12) von der Vormontageposition (X1) zu einer an den Längsträgern (11, 12) positionierte Endmontageposition (X3) verschoben wird und
die zumindest eine Modulbaugruppe (20) in der Endmontageposition (X3) an den Längsträgern (11, 12) fixiert und dadurch montiert wird
und wobei die zumindest eine Verschiebevorrichtung in der Endmontageposition (X3) von der zumindest einen Modulbaugruppe (20) entfernt wird, wobei
eine Modulbaugruppe (20) jeweils aus zwei Querträgern (21, 22) und einer Vielzahl von sich zwischen den Querträgern (21, 22) erstreckenden Modulen (23) gebildet ist, wobei
die Querträger (21, 22) an der Vormontageposition (X1) auf der Verschiebevorrichtung oder die Verschiebevorrichtung an der Vormontageposition (X1) an den Querträgern (21, 22) in einem in Längsrichtung (X) entlang der Längsträger (11, 12) vorbestimmten Abstand (A) zueinander angeordnet und ausgerichtet werden und
die Module (23) der Vielzahl von Modulen (23) an der Vormontageposition (X1) an den Querträgern (21, 22) ausgerichtet und fixiert werden.

2. Montageverfahren nach Anspruch 1, wobei
die Vormontageposition (X1) an einem entlang der Längsrichtung (X) der Längsträger (11, 12) endseitigen Abschnitt der Längsträger (11, 12) angeordnet ist.

3. Montageverfahren nach einem der vorhergehenden Ansprüche, wobei
eine erste Modulbaugruppe der Vielzahl von Modulbaugruppen an der Vormontageposition (X1) in ihrer vorbestimmten Anordnung an den Längsträgern (11, 12) ausgerichtet und auf einer ersten Verschiebevorrichtung angeordnet wird,
die erste Modulbaugruppe mit der ersten Verschiebevorrichtung entlang der Längsrichtung (X) von der Vormontageposition (X1) um zumindest eine Breite der ersten Modulbaugruppe entlang der Längsrichtung (X) auf eine Zwischenposition (X2) verschoben wird,
eine vorbestimmte Anzahl weiterer Modulbaugruppen der Vielzahl von Modulbaugruppen nacheinander an der Vormontageposition (X1) in ihrer vorbestimmten Anordnung an den Längsträgern (11, 12) ausgerichtet und auf einer jeweiligen Verschiebevorrichtungen angeordnet, gegenüber der jeweils vorangehenden auf der Zwischenposition (X2) angeordneten Modulbaugruppe ausgerichtet und vorzugsweise an der vorangehenden Modulbaugruppe fixiert sowie nacheinander in die Zwischenposition (X2) verschoben werden, wodurch die jeweils vorangehende(n) Modulbaugruppe(n) mit verschoben wird/werden, bis die Modulbaugruppen der Vielzahl von Modulbaugruppen sich auf ihrer jeweiligen Endmontageposition (X3) befinden oder die vorbestimmte Anzahl weiterer Modulbaugruppen nacheinander auf der Vormontageposition (X1) angeordnet wurden und die Modulbaugruppen der vorbestimmten Anzahl von Modulbaugruppen zusammen mit der ersten Modulbaugruppe auf ihre jeweilige Endmontageposition (X3) verschoben werden.

4. Montageverfahren nach einem der vorhergehenden Ansprüche, wobei
die Endmontageposition (X3) jeweils unmittelbar benachbart zu einer bereits an den Längsträgern (11, 12) fixierten Modulbaugruppe (20) positioniert ist und
die zumindest eine Modulbaugruppe (20) auf ihrer Endmontageposition (X3) an bzw. gegenüber der jeweils benachbarten bereits fixierten Modulbaugruppe (20) ausgerichtet wird.

5. Montageverfahren nach dem vorhergehenden Anspruch, wobei
die zumindest eine Modulbaugruppe (20) auf ihrer Endmontageposition (X3) an der jeweils benachbarten, bereits fixierten Modulbaugruppe (20) fixiert wird.

6. Montageverfahren nach einem der vorhergehenden Ansprüche, wobei
zwei unmittelbar aneinander angrenzende Modulbaugruppen einen gemeinsamen Querträger (21, 22) aufweisen, so dass zwei aneinander angrenzende Modulbaugruppen drei Querträger aufweisen.

7. Montageverfahren nach einem der vorhergehenden Ansprüche, wobei
die Module (23) Photovoltaikmodule sind und
jeweils zumindest einen elektrischen Anschluss aufweisen, wobei
die elektrischen Anschlüsse der Module (23) einer Modulbaugruppe (20) an der Vormontageposition (X1) miteinander verbunden werden und/oder
die elektrischen Anschlüsse der Module (23) benachbarter Modulbaugruppen (20), die auf der Vormontageposition (X1) unmittelbar benachbart sind, an der Vormontageposition (X1) miteinander verbunden werden und/oder
die elektrischen Anschlüsse der Module (23) benachbarter Modulbaugruppen (20, 20), die an der Endmontageposition (X3) unmittelbar benachbart sind, an der Endmontageposition (X3) miteinander verbunden werden.

8. Montageverfahren nach einem der vorhergehenden Ansprüche, wobei
die Verschiebevorrichtung aus einem ersten, auf einem ersten der zwei Längsträger (11) anordenbaren und entlang des ersten Längsträgers (11) verschiebbaren Rollenwagen (31) und einem zweiten, auf einem zweiten der zwei Längsträger (12) anordenbaren und entlang des zweiten Längsträgers (12) verschiebbaren Rollenwagen (32) gebildet ist.

9. Montageverfahren nach dem vorhergehenden Anspruch, wobei
der erste und der zweite Rollenwagen (31, 32) einer ersten Verschiebevorrichtung an einem ersten Querträger (21) einer Modulbaugruppe und der erste und der zweite Rollenwagen (31, 32) einer zweiten Verschiebevorrichtung an einem zweiten Querträger (22) der Modulbaugruppe angeordnet werden und
ein Abstand zwischen dem ersten und dem zweiten Querträger durch ein sich entlang des jeweiligen Längsträgers (11, 12) zwischen den jeweiligen Rollenwägen erstreckenden Abstandshalteelement (35) einstellbar ist und der Abstand (A) zwischen den Querträgern (21, 22) an der Vormontageposition (X1) mit dem Abstandshalteelement (35) eingestellt und an der Vormontageposition (X1) gehalten wird.

10. Montageverfahren nach einem der vorhergehenden Ansprüche, wobei
die Längsträger (11, 12) in vorbestimmten Abständen mit Stützpfosten (13) an dem Untergrund (10) verankert sind.

11. Montageverfahren nach einem der vorhergehenden Ansprüche, wobei
die zumindest eine Verschiebevorrichtung von der jeweiligen Modulbaugruppe gelöst und ohne die jeweiligen Modulbaugruppe (20) von der Endmontageposition (X3) auf die Vormontageposition (X1) zurückbewegt wird und
auf der Vormontageposition (X1) zumindest eine weiterer Modulbaugruppe der Vielzahl von Modulbaugruppen (20) auf der Verschiebevorrichtung angeordnet wird.

12. Verschiebevorrichtung zur Durchführung eines Montageverfahrens nach einem der vorhergehenden Ansprüche, wobei
die Verschiebevorrichtung aus zwei voneinander getrennten Rollenwägen (31, 32) gebildet wird, die jeweils auf einem der Längsträger (11, 12) der Modulbaugruppenkonstruktion (1) anordenbar sind,
die Rollenwägen (31, 32) jeweils an einem Querträger einer Modulbaugruppe anordenbar sind,
die zwei Rollenwägen (31, 32) jeweils zumindest eine Rolle (36) zum Abrollen auf dem jeweiligen Längsträger (11, 12) und jeweils zumindest ein Führungselement zur Führung entlang des jeweiligen Längsträgers aufweist und
an den Rollenwägen (31,32) ein Abstandshalteelement (35) anordenbar ist, durch das zwei jeweils auf einer Verschiebevorrichtung angeordneter Querträger an der Vormontageposition in einem vorbestimmten Abstand gehalten werden,
**dadurch gekennzeichnet, dass**
die Verschiebevorrichtung ausgebildet ist, in der Endmontageposition (X3) von der zumindest einen Modulbaugruppe (20) entfernt zu werden.

13. Verwendung einer Verschiebevorrichtung nach dem vorhergehenden Anspruch für ein Montageverfahren nach einem der Ansprüche 1 bis 11.

## Claims

1. A mounting method for mounting a module assembly construction (1), in particular a photovoltaic plant, of at least two longitudinal supports (11, 12) running in parallel, which are fixed to an underground (10), and a plurality of module assemblies (20) to be mounted on the longitudinal supports (11, 12), wherein a module assembly (20) mounted on the longitudinal supports (11, 12) extends transversely to the longitudinal supports (11, 12) and respectively connects them, wherein
at least one module assembly (20) of the plurality of module assemblies is oriented in a predetermined arrangement on the longitudinal supports (11, 12) in a pre-mounting position (X1) positioned on the longitudinal supports (11, 12) and is arranged on at least one displacement device which can be displaced on the longitudinal supports (11, 12) and along a longitudinal direction (X) of the longitudinal supports (11, 12),
the at least one module assembly (20) arranged on the at least one displacement device is displaced with the at least one displacement device along the longitudinal direction (X) of the longitudinal supports (11, 12) from the pre-mounting position (X1) to a final mounting position (X3) positioned on the longitudinal supports (11, 12), and
the at least one module assembly (20) is fixed on the longitudinal supports (11, 12) in the final mounting position (X3) and thus mounted,
and wherein the at least one displacement device is removed from the at least one module assembly (20) in the final mounting position (X3), wherein
a module assembly (20) is formed from respectively two transverse supports (21, 22) and a plurality of modules (23) extending between the transverse supports (21, 22), wherein
the transverse supports (21, 22) are arranged and oriented towards one another in the pre-mounting position (X1) on the displacement device or the displacement device in the pre-mounting position (X1) on the transverse supports (21, 22) at a predetermined distance in the longitudinal direction (X) along the longitudinal supports (11, 12), and
the modules (23) of the plurality of modules (23) are oriented and fixed in the pre-mounting position (X1) on the transverse supports (21, 22).

2. The mounting method according to claim 1, wherein
the pre-mounting position (X1) is arranged at an end-side section of the longitudinal supports (11, 12) along the longitudinal direction (X) of the longitudinal supports (11, 12).

3. The mounting method according to any one of the preceding claims, wherein
a first module assembly of the plurality of module assemblies is oriented in the pre-mounting position (X1) in its predetermined arrangement on the longitudinal supports (11, 12) and arranged on a first displacement device,
the first module assembly is displaced with the first displacement device along the longitudinal direction (X) from the pre-mounting position (X1) by at least a width of the first module assembly along the longitudinal direction (X) to an intermediate position (X2),
a predetermined number of further module assemblies of the number of module assemblies is arranged one after the other in the pre-mounting position (X1) in its predetermined arrangement on the longitudinal supports (11, 12) and arranged on a respective displacement device, oriented opposite to the respective preceding module assembly arranged on the intermediate position (X2) and preferably fixed to the preceding module assembly and displaced to the intermediate position (X2) one after the other, whereby the respective preceding module assembly/assemblies is/are also displaced, until the module assemblies of the plurality of module assemblies are in their respective final assembly position (X3) or the predetermined number of further module assemblies was arranged in the pre-mounting position (X1) one after the other and the module assemblies of the predetermined number of module assemblies together with the first module assembly are displaced to their respective final mounting position (X3).

4. The mounting method according to any one of the preceding claims, wherein
the final mounting position (X3) is respectively positioned directly adjacent to a module assembly (20) already fixed to the longitudinal supports (11, 12), and
the at least one module assembly (20) is oriented in its final mounting position (X3) on or opposite to the respective adjacent, already fixed module assembly (20).

5. The mounting method according to the preceding claim, wherein
the at least one module assembly (20) is fixed to the respective adjacent, already fixed module assembly (20) in its final mounting position (X3).

6. The mounting method according to any one of the preceding claims, wherein
two directly adjacent module assemblies have a common transverse support (21, 22) such that two adjacent module assemblies have three transverse supports.

7. The mounting method according to any one of the preceding claims, wherein
the modules (23) are photovoltaic modules, and
respectively have at least one electric connection, wherein
the electric connections of the modules (23) of a module assembly (20) are connected to one another in the pre-mounting position (X1), and/or
the electric connections of the modules (23) of adjacent module assemblies (20), which are directly adjacent in the pre-mounting position (X1), are connected to one another in the pre-mounting position (X1), and/or
the electric connections of the modules (23) of adjacent module assemblies (20, 20), which are directly adjacent in the final mounting position (X3), are connected to one another in the final mounting position (X3).

8. The mounting method according to any one of the preceding claims, wherein
the displacement device is formed from a first roller carriage (31) which can be arranged on a first one of the two longitudinal supports (11) and displaced along the first longitudinal support (11) and a second roller carriage (32) which can be arranged on a second one of the two longitudinal supports (12) and displaced along the second longitudinal support (12).

9. The mounting method according to the preceding claim, wherein
the first and the second roller carriage (31, 32) of a first displacement device are arranged on a first transverse support (21) of a module assembly and the first and the second roller carriage (31, 32) of a second displacement device are arranged on a second transverse support (22) of the module assembly, and
a distance between the first and the second transverse support can be adjusted by a spacer element (35) extending along the respective longitudinal support (11, 12) between the respective roller carriages and the distance (A) between the transverse supports (21, 22) is adjusted in the pre-mounting position (X1) with the spacer element (35) and maintained in the pre-mounting position (X1).

10. The mounting method according to any one of the preceding claims, wherein
the longitudinal supports (11, 12) are anchored to the underground (10) with support posts (13) at predetermined distances.

11. The mounting method according to any one of the preceding claims, wherein
the at least one displacement device is released from the respective module assembly and moved back from the final mounting position (X3) to the pre-mounting position (X1) without the respective module assembly (20), and
at least one further module assembly of the plurality of module assemblies (20) is arranged on the displacement device in the pre-mounting position (X1).

12. A displacement device for performing a mounting method according to any one of the preceding claims, wherein
the displacement device is formed from two roller carriages (31, 32) separated from one another, which can respectively be arranged on one of the longitudinal supports (11, 12) of the module assembly construction (1),
the roller carriages (31, 32) can respectively be arranged on a transverse support of a module assembly,
the two roller carriages (31, 32) respectively have at least one roller (36) for rolling on the respective longitudinal support (11, 12) and respectively at least one guiding element for guiding along the respective longitudinal support, and
a spacer element (35) can be arranged on the roller carriages (31, 32), through which two respective transverse supports which can be arranged on a displacement device can be maintained in the pre-mounting position at a predetermined distance,
**characterized in that** the displacement device is formed to be removed from the at least one module assembly (20) in the final mounting position (X3).

13. Use of a displacement device according to the preceding claim for a mounting method according to any one of claims 1 to 11.

## Revendications

1. Procédé de montage permettant de monter une construction de sous-ensembles de modules (1), en particulier une installation photovoltaïque, à partir d'au moins deux longerons (11, 12) s'étendant en parallèle et fixés à un support (10) et d'une pluralité de sous-ensembles de modules (20) à monter sur les longerons (11, 12), dans lequel un sous-ensemble de modules (20) monté sur les longerons (11, 12) s'étend transversalement aux longerons (11, 12) en les reliant respectivement les uns aux autres, dans lequel
au moins un sous-ensemble de modules (20) de la pluralité de sous-ensembles de modules, est aligné sur une position de prémontage (X1) positionnée sur les longerons (11, 12), dans une disposition prédéterminée sur les longerons (11, 12) et est disposé sur au moins un dispositif de déplacement pouvant être déplacé au niveau des longerons (11, 12) et le long d'une direction longitudinale (X) des longerons (11, 12),
ledit au moins un sous-ensemble de modules (20) disposé sur ledit au moins un dispositif de déplacement est déplacé par ledit au moins un dispositif de déplacement le long de la direction longitudinale (X) des longerons (11, 12) de la position de prémontage (X1) à une position de montage final (X3) positionnée sur les longerons (11, 12), et
ledit au moins un sous-ensemble de modules (20) est fixé dans la position de montage final (X3) sur les longerons (11, 12) et est ainsi monté,
et dans lequel ledit au moins un dispositif de déplacement est éloigné dans la position de montage final (X3) dudit au moins un sous-ensemble de modules (20), dans lequel
un sous-ensemble de modules (20) est formé respectivement de deux traverses (21, 22) et d'une pluralité de modules (23) s'étendant entre les traverses (21, 22), dans lequel
les traverses (21, 22) dans la position de prémontage (X1) sur le dispositif de déplacement, ou le dispositif de déplacement dans la position de prémontage (X1) sur les traverses (21, 22), sont disposées les uns par rapport aux autres et alignés à une distance prédéterminée (A) dans la direction longitudinale (X) le long des longerons (11, 12), et
les modules (23) de la pluralité de modules (23) dans la position de prémontage (X1) sont alignés et fixés sur les traverses (21, 22).

2. Procédé de montage selon la revendication 1, dans lequel
la position de prémontage (X1) est disposée au niveau d'une partie côté extrémité des longerons (11, 12) le long de la direction longitudinale (X) des longerons (11, 12).

3. Procédé de montage selon l'une quelconque des revendications précédentes, dans lequel
un premier sous-ensemble de modules de la pluralité de sous-ensembles de modules est aligné sur la position de prémontage (X1) dans sa disposition prédéterminée sur les longerons (11, 12) et est disposé sur un premier dispositif de déplacement,
le premier sous-ensemble de modules est déplacé par le premier dispositif de déplacement le long de la direction longitudinale (X) de la position de prémontage (X1) d'au moins une largeur du premier sous-ensemble de modules le long de la direction longitudinale (X) jusqu'à une position intermédiaire (X2),
un nombre prédéterminé de sous-ensembles de modules supplémentaires de la pluralité de sous-ensembles supplémentaires est aligné successivement sur la position de prémontage (X1) dans sa disposition prédéterminée sur les longerons (11, 12), et est disposé sur un dispositif de déplacement respectif, est aligné par rapport au sous-ensemble de modules respectivement précédent disposé sur la position intermédiaire (X2), et est de préférence fixé au sous-ensemble de modules précédent, et est déplacé successivement jusqu'à la position intermédiaire (X2) de sorte que le ou les sous-ensembles de modules respectivement précédents sont également déplacés jusqu'à ce que les sous-ensembles de modules de la pluralité de sous-ensembles de modules se trouvent dans leur position de montage final respectif (X3) ou le nombre prédéterminé de sous-ensembles de modules supplémentaires a été disposé successivement dans la position de prémontage (X1) et les sous-ensembles de modules du nombre prédéterminé de sous-ensembles de modules sont déplacés conjointement avec le premier sous-ensemble de modules jusqu'à leur position de montage final respective (X3).

4. Procédé de montage selon l'une quelconque des revendications précédentes, dans lequel
la position de montage final (X3) est positionnée respectivement de manière directement adjacente à un sous-ensemble de modules (20) déjà fixé sur les longerons (11, 12), et
ledit au moins un sous-ensemble de modules (20) dans sa position de montage final (X3) est aligné sur le ou par rapport au sous-ensemble de modules (20) déjà fixé, respectivement adjacent.

5. Procédé de montage selon la revendication précédente, dans lequel
ledit au moins un sous-ensemble de modules (20) dans sa position de montage final (X3) est fixé au sous-ensemble de modules (20) déjà fixé, respectivement adjacent.

6. Procédé de montage selon l'une quelconque des revendications précédentes, dans lequel
deux sous-ensembles de modules directement adjacents l'un à l'autre présentent une traverse commune (21, 22) de sorte que deux sous-ensembles de modules adjacents l'un à l'autre présentent trois traverses.

7. Procédé de montage selon l'une quelconque des revendications précédentes, dans lequel
les modules (23) sont des modules photovoltaïques, et
présentent respectivement au moins une connexion électrique, dans lequel
les connexions électriques des modules (23) d'un sous-ensemble de modules (20) sont reliées les unes aux autres dans la position de prémontage (X1), et/ou
les connexions électriques des modules (23) de sous-ensembles de modules voisins (20) qui sont directement voisins dans la position de prémontage (X1) sont reliées les unes aux autres dans la position de prémontage (X1), et/ou
les connexions électriques des modules (23) de sous-ensembles de modules voisins (20, 20) qui sont directement voisins dans la position de montage final (X3) sont reliées les uns aux autres dans la position de montage final (X3).

8. Procédé de montage selon l'une quelconque des revendications précédentes, dans lequel
le dispositif de déplacement est formé d'un premier chariot à galets (31) pouvant être disposé sur un premier des deux longerons (11) et pouvant être déplacé le long du premier longeron (11) et d'un deuxième chariot à galets (32) pouvant être disposé sur un deuxième des deux longerons (12) et pouvant être déplacé le long du deuxième longeron (12).

9. Procédé de montage selon la revendication précédente, dans lequel
le premier et le deuxième chariot à galets (31, 32) d'un premier dispositif de déplacement sont disposés sur une première traverse (21) d'un sous-ensemble de modules, et le premier et le deuxième chariot à galets (31, 32) d'un deuxième dispositif de déplacement sont disposés sur une deuxième traverse (22) du sous-ensemble de modules, et
une distance entre la première et la deuxième traverse est réglable par un élément écarteur (35) s'étendant entre les chariots à galets respectifs, et la distance (A) entre les traverses (21, 22) dans la position de prémontage (X1) est réglée par l'élément écarteur (35) et est maintenue dans la position de prémontage (X1).

10. Procédé de montage selon l'une quelconque des revendications précédentes, dans lequel
les longerons (11, 12) sont ancrés à des distances prédéterminées avec des montants d'appui (13) dans le support (10).

11. Procédé de montage selon l'une quelconque des revendications précédentes, dans lequel
ledit au moins un dispositif de déplacement est détaché du sous-ensemble de modules respectif est ramené sans le sous-ensemble de modules respectif (20) de la position de montage final (X3) à la position de prémontage (X1), et
dans la position de prémontage (X1), au moins un sous-ensemble de modules supplémentaire de la pluralité de sous-ensembles de modules (20) est disposé sur le dispositif de déplacement.

12. Dispositif de déplacement permettant d'exécuter un procédé de montage selon l'une quelconque des revendications précédentes, dans lequel
le dispositif de déplacement est formé de deux chariots à galets (31, 32) séparés l'un de l'autre qui peuvent être disposés respectivement sur l'un des longerons (11, 12) de la construction de sous-ensembles de modules (1),
les chariots à galets (31, 32) peuvent être disposés respectivement sur une traverse d'un sous-ensemble de modules,
les deux chariots à galets (31, 32) présentent respectivement au moins un galet (36) pour rouler sur le longeron respectif (11, 12) et respectivement au moins un élément de guidage pour le guidage le long du longeron respectif, et
sur les chariots à galets (31, 32) peut être disposé un élément écarteur (35) qui maintient deux traverses disposées respectivement sur un dispositif de déplacement dans la position de prémontage à une distance prédéterminée,
**caractérisé en ce que** le dispositif de déplacement dans la position de montage final (X3) est réalisé pour être éloigné dudit au moins un sous-ensemble de modules (20).

13. Utilisation d'un dispositif de déplacement selon la revendication précédente pour un procédé de montage selon l'une quelconque des revendications 1 à 11.
